# EUROPEAN PATENT SPECIFICATION

(11) **EP 2 161 462 B1**
(45) Date of publication and mention of the grant of the patent: **02.04.2014**
(21) Application number: 08706460.6
(22) Date of filing: 02.02.2008
(51) Int. Cl.: F16B 7/04, F16B 12/32, A47F 3/00

(54) **THREE-CLAMP TYPE LOCKSET**
SCHLOSS MIT DREI KLEMMEN
ENSEMBLE DE SERRURE DU TYPE À TROIS ATTACHES

(30) Priority: 26.06.2007 CN 200710024653
(43) Date of publication of application: 10.03.2010
(73) Proprietor: Changzhou Lingtong Exhibition Products Co., Ltd, Changzhou, Jiangsu 213102 (CN)
(72) Inventor: LIU, Lianping, Jiangsu 213102 (CN); HE, Kaifeng, Jiangsu 213102 (CN)
(74) Representative: Ratcliffe, Susan Margaret
(86) International application number: PCT/CN2008/000277
(87) International publication number: WO 2009/000135

(56) References cited:
- CN-A- 101 105 197
- CN-Y- 2 337 268
- CN-Y- 2 441 895
- CN-Y- 2 514 158
- CN-Y- 2 833 208
- DE-A1- 4 012 332
- DE-C1- 3 927 979
- GB-A- 2 055 438
- US-A- 4 815 178

## Description

### Technical Field

The present invention relates to a locking device for rapidly connecting sections comprising a rabbet - in particular a three-clamp locking device, which consists of a three-clamp spring plate.

### Prior Art

Presently available three-clamp locking devices encompass a locking housing, a three-clamp spring plate and an eccentric wheel, The locking housing is an integral construction comprising an inner cavity. A convex lug in positional adaptation to the rabbet of section and a bulge for guiding the spring plate are arranged at the front part of the locking housing. A mounting hole for the eccentric wheel and a bulge for supporting the spring plates are arranged at the rear part of the locking housing. Two chamfers with unequal width, which are provided in a symmetrical manner at the front part of the three-clamp spring plate, divide the spring plate into three parts. The two edges are curved upwards by 180° to form forward stand bars. A downwards curvature by 180° takes place in the center with the formation of a backward stand bar. A small stand bar, which slants downwards, is at the center part of the spring plate, while the rear part of the spring plate is a circular opening in adaptation to the eccentric wheel.

A screw wrench opening is arranged at the upper part of the eccentric wheel. The upper cylinder section and the lower cylinder section are concentric and are adapted to the locking housing. The center part is the eccentric wheel in adaptation to the circular openings of the three-clamp spring plate and at an eccentric distance to the upper cylinder section and lower cylinder section. The spring plate moves forwards and backwards under the action of eccentric wheel. The section is furthermore fastened by means of the bulge for guiding, which is provided at the looking housing. In Patent EP0166794, the eccentric wheel fulfills the functions of driving the spring plate to move forwards and backwards and preventing the eccentric wheel from rotating beyond 180°. These two functions are in each case realized by the eccentric wheel and the stopping bulge. In the case of a rotation of the eccentric wheel by 180° in clockwise direction, the eccentric wheel drives the spring plate to move backwards. The stopping bulge now leans tightly against the side face of the opening of the eccentric wheel of the three-clamp spring plate so as to prevent the rotation of the eccentric wheel by more than 180°. The said construction encompasses the deficiencies specified below:
a. The production of the spring plate is complicated. The rear end of the spring plate is curved upwards by 90°, so that the locking dimensions of forward and backward stand bars cannot be ensured easily.
b. The production of the eccentric wheel is complicated. In order to ensure the movement distance of the spring plate, the dimensions of the eccentric wheel are too large, and a openning must be cut at the locking housing so as to keep off the eccentric wheel, which lowers the strength of the locking housing.
c. Due to the limitation of the dimensions of the construction, the stopping bulge cannot be too large and thus the stopping lever of force is relatively small. In response to a moment of the force of the locking being too high, the locking housing can tear easily, thus leading to an invalidation of the lock.

The Chinese Patent ZL96226976.5 also discloses a three-clamp locking device. The eccentric part of the eccentric wheel is a conventional circular construction. The eccentric wheel drives the spring plate to move forwards and backwards and prevents the rotation of the eccentric wheel by more than 180°. These two functional characteristics are both realized by a round eccentric wheel. In the case of a rotation of the eccentric wheel in clockwise direction, the eccentric wheel together with the long round opening of the spring plate move the spring plate backwards. In response to a rotation by 180°, the eccentric wheel leans tightly against the side face of the long round opening of the three-clamp spring plate and prevents the rotation of the eccentric wheel by more than 180°. The deficiencies of the afore-identified construction are specified below:
a. Due to the fact that the eccentric part of the eccentric wheel is a conventional round construction, only a small stopping lever of force, which only corresponds to the eccentric moment of force, is available during locking. A rotation of the eccentric wheel by more than 180° leads to the generated lateral force to increase in multiples and easily leads to crack of the locking housing and to an invalidation of the lock.
b. In response to a rotation by more than 180° when the eccentric being loosed, the self-locking angle is small, thus easily resulting in self-locking, so that the eccentric wheel cannot be pushed downwards, which negatively impacts the mounting and demounting of the three-clamp locking device.

### Content of the Invention

The technical problem, which is to be solved by the present invention, lies in overcoming the aforementioned deficiencies of the prior art by providing a three-clamp locking device with large stopping lever of force in response to locking, so as to prevent crack of the locking housing and an invalidation of the look caused by an increased lateral force.

To solve the aforementioned technical problems, the present invention provides the following technical solutions:

Three-clamp locking device, which encompasses a locking housing, a three-clamp spring plate and an eccentric wheel, wherein the said three-clamp spring plate is arranged within the said locking housing and an opening in adaptation to the eccentric wheel is arranged at the three-clamp spring plate, wherein the three-clamp spring plate is moved forwards and backwards by means of rotation of the eccentric wheel provided in the opening. Furthermore, a bulge for supporting the three-clamp spring plate is arranged at the locking housing. The said eccentric wheel is a fan-shaped eccentric wheel and the said opening is a semi-circular opening, which is adapted to the said fan-shaped eccentric wheel and which is formed by overlapping a rectangular and a round shape.

The inner end face of the said bulge for supporting is embodied as an inclined face and runs upwards in a beveled manner to the extension direction of the three-clamp spring plate.

As compared to the prior art, the present invention encompasses the following advantages:
1. In the case of the improved three-clamp locking device, the side face of the fan-shaped eccentric wheel leans tightly against the straight edge of the other rectangular end of the semi-circular opening of the three-clamp spring plate in response to the rotation of the eccentric wheel in clockwise direction by 180° and in response to locking of the section. The stopping lever of force is now greater than in the case of similar conventional locking devices comprising a round eccentric wheel and in the case of an eccentric wheel comprising a stopping bulge. This thus leads to an effective increase of the resistance against lateral moments of force. The increased stopping lever of force thus simultaneously leads to an increase of the self-looking angle, so that a self-locking does not take place when the eccentric wheel is loosened and rotated beyond 180°, thus the eccentric wheel cannot be pushed downwards. Mounting and demounting of the three-clamp locking device are thus facilitated.
2. After the bulge for supporting and guiding the spring plate, which is at the rear end of the locking housing, changes from straight edge to bevel edge, in the event of a downwards movement of the spring plate, for example due to an incorrect opertation, the spring plate can be restored along the bevel edge and the reliability of the operation is thus ensured. The strength of the locking housing is thus increased at the same time.

### Description of the Figures

Figure 1 is the illustration of the construction of the three-clamp locking device according to the present invention.
Figure 2 is the illustration of the construction of the housing of the three-clamp locking device according to the present invention.
Figure 3 is the top view of Figure 2.
Figure 4 is the illustration of the construction of the spring plate of the three-clamp locking device according to the present invention.
Figure 5 is the top view of Figure 4.
Figure 6 is the illustration of the construction of the eccentric wheel of the three-clamp locking device according to the present invention.
Figure 7 is the illustration of the state of use of the three-clamp looking device according to the present invention.

### Explanation of the Reference Numerals

| | | | |
|---|---|---|---|
| 1. | locking housing | 2. | three-clamp spring plate |
| 3. | fan-shaped eccentric wheel | 4. | convex lug |
| 5. | bulge for guiding the spring plate | 6. | mounting hole |
| 7. | bulge for supporting the spring plate | 8. | slot |
| 9. | forward stand bar | 10. | backward stand bar |
| 11. | small stand bar | 12. | semi-circular opening |
| | | | |
| 13. | screw wrench opening | 14. | upper cylinder section |
| 15. | lower cylinder section | 16. | fan-shaped eccentric wheel |

### Embodiment

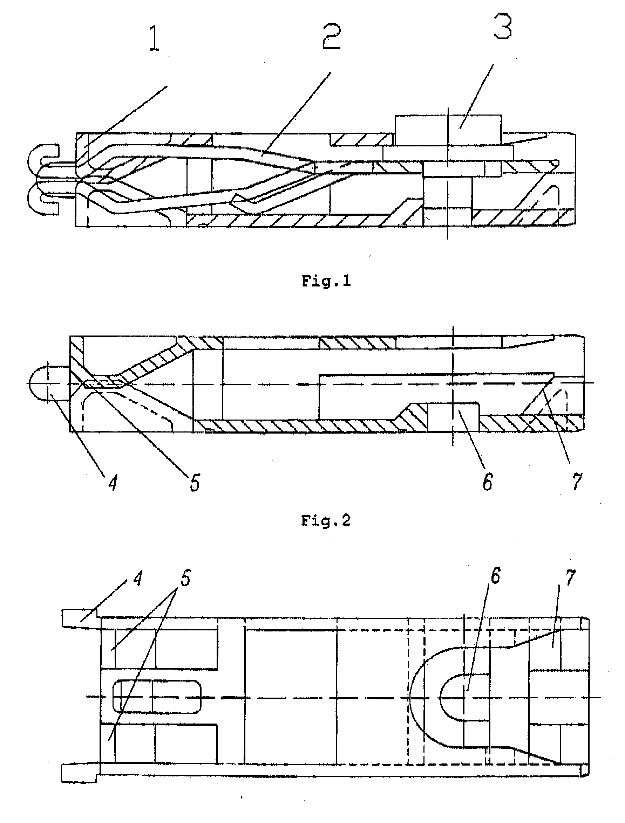

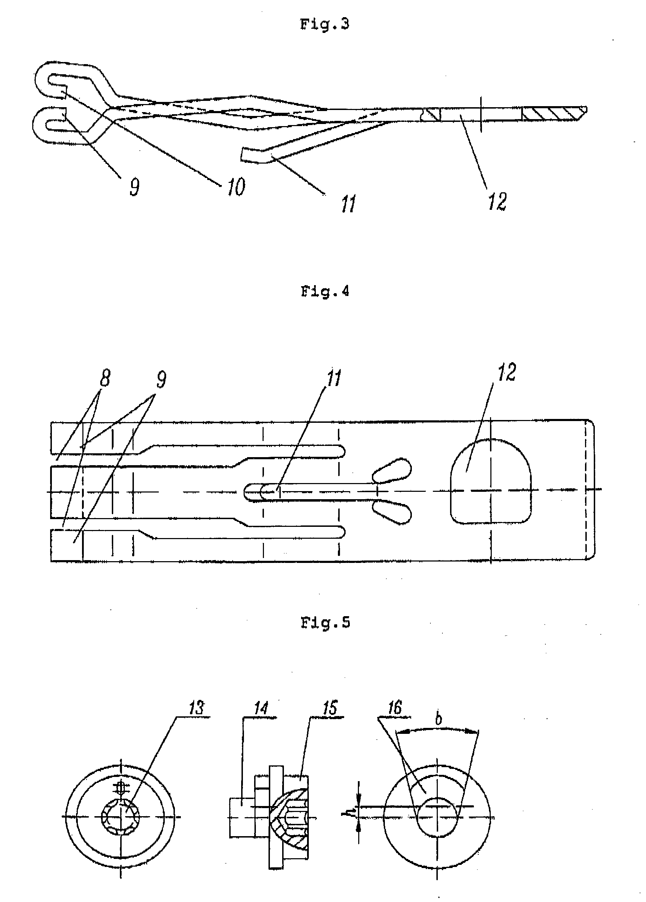

A detailed explanation of the present invention is to be illustrated below with reference to the figures. As is shown in Figure 1, the three-clamp looking device mainly encompasses a locking housing 1, a three-clamp spring plate 2 and a fan-shaped eccentric wheel 3, wherein the locking housing is an integral construction comprising an inner cavity. The convex lug 4 in positional adaptation to the rabbet of section and the bulge for guiding the spring plate 5 are arranged at the front part of the locking housing. The mounting hole 6 for the eccentric wheel 3 and a bulge for supporting the spring plate 7 with an inclined face are arranged at the rear part of the looking housing. See Figure 2 and Figure 3 with reference thereto. Two chamfers 8 with unequal width, which are provided in a symmetrical manner at the front part of the three-clamp spring plate 2, divide the spring plate into three parts. The two edges are curved upwards by 180° to form a forward stand bar 9. A downwards curvature by 180° takes place in the center with the formation of a backward stand bar 10. A small stand bar 11, which slants downwards, is arranged at the center part of the spring plate 2, while the rear part of the spring plate 2 is a semi-circular opening 12 in adaptation to the eccentric wheel 3, which is formed by overlapping a rectangular and round shape. See Figure 4 and Figure 5 with reference thereto.

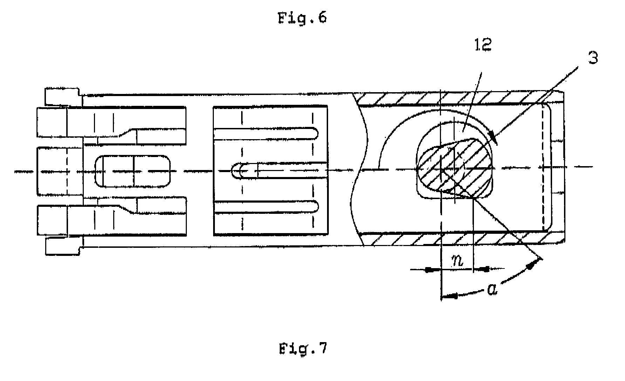

A screw wrench opening 13 is arranged at the upper part of the eccentric wheel 3. The upper cylinder section 14 and the lower cylinder section 15 are concentric and are adapted to the locking housing 1. The center part is the fan-shaped eccentric wheel 16 with eccentric distance h in adaptation to the semi-circular opening 12 of the three-clamp spring plate 2. The chord length corresponding to the arc of the fan-shaped eccentric wheel 16 can be less than the diameter of the upper cylinder section 14 or can also be more than the diameter of the upper cylinder section 14. Optimally, the angle b,which is formed by the tangents from both end points of the arc to the upper cylinder section 14, is no more than 120°. See Figure 6 with reference thereto.

In response to the practical use, the eccentric wheel is initially pushed downwards until it is flush with the locking housing 1 and is then inserted along the vertical direction into the section which has an opening for the eccentric wheel. The elastic force of the small stand bar 11 of the spring plate 2 causes the eccentric wheel to spring out of the section opening, as shown in Figure 7. The section provided with the locking device is inserted into the lateral rabbet of the section to be connected. The eccentric wheel is rotated in clockwise direction by means of a screw wrench. The fan-shaped eccentric wheel 3 is adapted to the semi-circular opening 12 of the spring plate 2 and drives the three-clamp spring plate 2 to move backwards. In response to the rotation of the eccentric wheel up to 180°, the side face of the fan-shaped eccentric wheel 3 leans tightly against the straight edge of the semi-circular opening 12 of the three-clamp spring plate 2 so as to prevent the rotation of the eccentric wheel by more than 180° with invalidation of the locking. At the same time, the bulge for guiding 5, which is provided at the locking housing 1, causes the forward stand bar 9 and the backward stand bar 10 of the spring plate to be opened and to hook the inner side faces of the rabbet of the section, thus the two sections are locked together. In this case, the rear end of the spring plate 2 is located above the bulge for supporting 7, which is provided at the locking housing 1, and prevents the eccentric wheel from moving downwards, as shown in Figure 5.

In response to the rotation of the eccentric wheel in clockwise direction by 180° which results in the locking of the section, the side face of the fan-shaped eccentric wheel 3 leans tightly against the straight edge of the semi-circular opening 12 of the three-clamp spring plate. See Figure 5 with reference thereto. In this case, the stopping lever of force n is greater than in the case of similar conventional locking devices comprising a round eccentric wheel and an eccentric wheel comprising a stopping bulge. This thus leads to an effective increase of the resistance against lateral moments of force. The increased lever of force thus simultaneously leads to an increase of the self-locking angle a, thus self-locking does not take place when the eccentric wheel is loosened and rotated beyond 180°, so that the eccentric wheel can be pushed downwards. Mounting and demounting of the three-clamp locking device are thus facilitated.

## Claims

1. A three-clamp locking device, which encompasses a locking housing (1), a three-clamp spring plate (2) and an eccentric wheel (3), wherein the said three-clamp spring plate (2) is arranged within the said locking housing (1) and an opening (12) in adaptation to the eccentric wheel (3) is arranged at the three-clamp spring plate (2), wherein the three-clamp spring plate (2) is moved forwards and backwards by means of rotation of the eccentric wheel (3) provided in the opening (12) and a bulge for supporting (7) which supports the three-clamp spring plate (2) is arranged at the locking housing (1), **characterized in that** the said eccentric wheel is a fan-shaped eccentric wheel (3) and that the said opening (12) is a semi-circular opening, which is adapted to the said fan-shaped eccentric wheel (3) and which is formed by overlapping a rectangular and a round shape.

2. The three-clamp locking device according to claim 1, **characterized in that** the inner end face of the said bulge for supporting (7) is embodied as an inclined face and that it extends upwards in a beveled manner to the extension direction of the three-clamp spring plate.

## Patentansprüche

1. Verschlussvorrichtung mit drei Klemmen, umfassend ein Verschlussgehäuse (1), eine Federplatte (2) mit drei Klemmen, und ein exzentrisches Rad (3), wobei die Federplatte (2) mit drei Klemmen in dem Verschlussgehäuse (1) angeordnet ist, und eine Öffnung (12) in Anpassung an das exzentrische Rad (3) an der Federplatte (2) mit drei Klemmen angeordnet ist, wobei die Federplatte mit drei Klemmen (2) mit Hilfe der Drehung des exzentrischen Rads (3), das in der Öffnung (12) bereitgestellt ist, nach vorne und nach hinten bewegt wird, und eine Stützwölbung (7), die die Federplatte (2) mit drei Klemmen stützt, im Verschlussgehäuse (1) angeordnet ist, **dadurch gekennzeichnet, dass** das exzentrische Rad ein fächerförmiges exzentrisches Rad (3) ist, und dass die Öffnung (12) eine halbkreisförmige Öffnung ist, die an das fächerförmige exzentrische Rad (3) angepasst ist, und die durch die Überlappung einer rechtwinkligen und einer runden Form gebildet ist.

2. Verschlussvorrichtung mit drei Klemmen nach Anspruch 1, **dadurch gekennzeichnet, dass** die innere Endseite der Stützwölbung (7) als eine geneigte Seite ausgeführt ist, und dass sie sich auf eine abgeschrägte Weise nach oben in die Ausdehnungsrichtung der Federplatte mit drei Klemmen erstreckt.

## Revendications

1. Dispositif de verrouillage à trois attaches, qui comprend un boîtier de verrouillage (1), une plaque à ressort à trois attaches (2) et une roue excentrique (3), ladite lame ressort à trois attaches (2) étant agencée à l'intérieur dudit boîtier de verrouillage (1) et une ouverture (12) en adaptation avec la roue excentrique (3) étant aménagée à la lame ressort à trois attaches (2), la lame ressort à trois attaches (2) étant déplacée vers l'avant et vers l'arrière au moyen d'une rotation de la roue excentrique (3) disposée dans l'ouverture (12) et un renflement de support (7) qui supporte la lame ressort à trois attaches (2) étant agencé au boîtier de verrouillage (1), **caractérisé par le fait que** ladite roue excentrique est une roue excentrique en forme d'éventail (3) et que ladite ouverture (12) est une ouverture semi-circulaire, qui est adaptée à ladite roue excentrique en forme d'éventail (3) et qui est formée par chevauchement d'une forme rectangulaire et d'une forme ronde.

2. Dispositif de verrouillage à trois attaches selon la revendication 1, **caractérisé par le fait que** la face d'extrémité interne dudit renflement de support (7) est réalisée sous la forme d'une face inclinée et qu'il s'étend vers le haut d'une manière en biseau par rapport à la direction d'extension de la lame ressort à trois attaches.
